# EUROPEAN PATENT APPLICATION

(11) **EP 4 576 330 A1**
(43) Date of publication of application: **25.06.2025**
(21) Application number: 24219328.2
(22) Date of filing: 12.12.2024
(51) Int. Cl.: H01M 10/613, H01M 10/6567, H01M 10/6568, H01M 50/204

(54) **IMMERSED COOLED BATTERY MODULE**

(30) Priority: 22.12.2023 TW 112150237
(71) Applicant: ETI CA Battery Inc., New Taipei City 241 (TW)
(72) Inventor: WU, Wei-Chen, New Taipei City (TW)
(74) Representative: Balder IP Law, S.L.

(57) **Abstract**

An immersed cooled battery module (100) includes a battery tank (110), battery cells (120), and a modular panel (130). The battery tank (110) includes an outer tank (112) and an inner tank (114). The inner tank (114) is arranged in the outer tank (112). The inner tank (114) has an opening (115) connecting to the inner tank (114) and the outer tank (112). The battery cells (120) are arranged in the inner tank (114). The modular panel (130) is installed on one side of the outer tank (112). The modular panel (130) has a liquid inlet (132) and a liquid outlet (134). The liquid inlet (132) is connected to the inner tank (114). The liquid outlet (134) is connected to the outer tank (112). A coolant enters the inner tank (114) from the liquid inlet (132), then overflows to the outer tank (112) through the opening (115), and finally discharges from the liquid outlet (134) to complete the circulation of the coolant.

## Description

### BACKGROUND OF THE INVENTION

This application claims priority for the TW patent application no. 112150237 filed on 22 December 2023, the content of which is incorporated by reference in its entirely.

### Field of the Invention

The present invention relates to a battery module, particularly to an immersed cooled battery module.

### Description of the Related Art

There are a large number of battery cells in energy storage batteries. In order to achieve good temperature consistency, the latest cooling method is immersion cooling that immerses the battery cells in the coolant and circulates the coolant to absorb heat energy. Because the coolant directly touches the surface of the battery cell, the heat dissipation efficiency is high such that the heat of the battery cell can be more uniformly dissipated. However, the conventional immersed cooling design places the battery cells in a sealed module and applies high pressure to the coolant to circulate the liquid. This method has the following disadvantages: (1) it is easy for a coolant to leak out due to poor sealing; and (2) the coolant pipeline is ruptured due to excessive pressure.

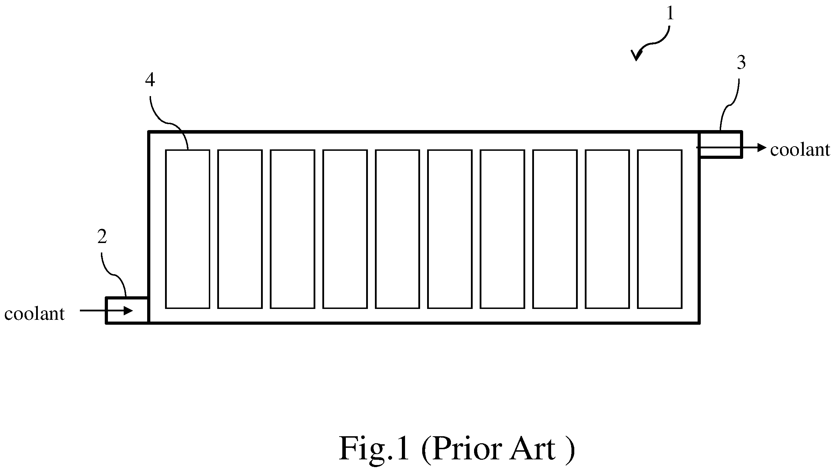

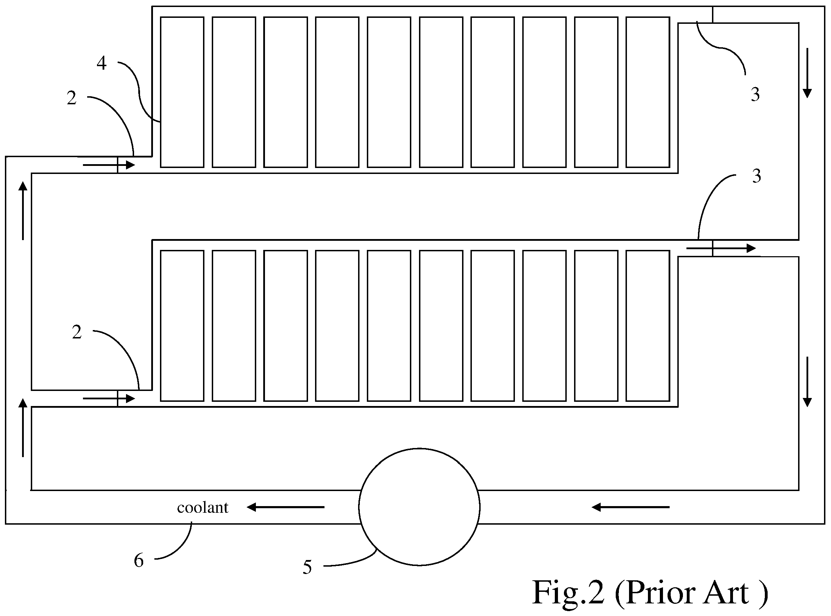

Please refer to Fig.1 and Fig.2. Fig.1 illustrates a conventional battery module 1 with coolant circulation. This battery module 1 has a liquid inlet 2 and a liquid outlet 3. As illustrated in Fig.2, a pump 5 is used to circulate the coolant of the battery module 1, thereby removing the heat from battery cells 4. The direction of the arrow indicates the flow direction of the coolant. Since the battery module 1 and a pipeline 6 must be sealed well to implement effective cooling circulation. However, the pressure of the pump 5 is often too great such that the pipeline 6 is ruptured or the seal of the battery module 1 is deteriorated, thereby leaking out the coolant.

### SUMMARY OF THE INVENTION

The primary objective of the present invention is to provide an immersed cooled battery module, which significantly reduces the pump thrust required for coolant circulation and avoids bursting a coolant pipe. Thus, the coolant will not be leaked out due to poor sealing.

In order to achieve the foregoing objective, the present invention provides an immersed cooled battery module, which includes a battery tank, a plurality of battery cells, and a modular panel. The battery tank includes an outer tank and an inner tank. The inner tank is arranged in the outer tank. The inner tank has an opening connecting to the inner tank and the outer tank. The battery cells are arranged in the inner tank. The modular panel is installed on one side of the outer tank. The modular panel has a liquid inlet and a liquid outlet. The liquid inlet is connected to the inner tank. The liquid outlet is connected to the outer tank. A coolant enters the inner tank from the liquid inlet, then overflows to the outer tank through the opening, and finally discharges from the liquid outlet to complete circulation of the coolant.

According to an embodiment of the present invention, there are multiple battery tanks connected in series. The liquid outlet of the modular panel on one of the two adjacent battery tanks is connected to the liquid inlet of the modular panel on another of the two adjacent battery tanks.

According to an embodiment of the present invention, the immersed cooled battery module further includes a connection pipeline on the outer side of the outer tank. The liquid outlet of the modular panel on one of the two adjacent battery tanks is connected to the liquid inlet of the modular panel on another of the two adjacent battery tanks through the connection pipeline.

According to an embodiment of the present invention, there are multiple battery tanks connected in parallel. The liquid inlets of the modular panels on the battery tanks are connected together. The liquid outlets of the modular panels on the battery tanks are connected together.

According to an embodiment of the present invention, the immersed cooled battery module further includes two connection pipelines on the outer side of the outer tank. One of the connection pipelines is connected to the liquid inlets of the modular panels on the battery tanks and another of the connection pipelines is connected to the liquid outlets of the modular panels on the battery tanks.

According to an embodiment of the present invention, the immersed cooled battery module further includes a pump on the outer side of the outer tank. The pump is connected to the liquid inlet and the liquid outlet and configured to promote the circulation of the coolant.

Compared with the conventional technology, the present invention has the following advantages.
1. The immersed cooled battery module of the present invention employs the battery tank with the inner and outer tanks, which can effectively avoid leaking out the coolant due to poor sealing or rupturing the pipeline due to excessive pressure provided by the pump.
2. The immersed cooled battery module of the present invention does not cause coolant leakage without completely sealing each battery module.
3. The immersed cooled battery module of the present invention still retains the same amount of the coolant in each battery module even when the pump stops operating. That is to say, the pump does not need to run full time. Therefore, the pump has low operating costs.

Below, the embodiments are described in detail in cooperation with the drawings to make easily understood the technical contents, characteristics and accomplishments of the present invention.

### BRIEF DESCRIPTION OF THE DRAWINGS

Fig.1 is a schematic diagram illustrating a conventional battery module with coolant circulation;
Fig.2 is a schematic diagram illustrating the coolant leakage of a conventional battery module with coolant parallel circulation;
Fig.3 is a side view of an immersed cooled battery module according to an embodiment of the present invention;
Fig.4 is a front view of a modular panel of an immersed cooled battery module according to an embodiment of the present invention;
Fig.5 is a top view of an immersed cooled battery module according to an embodiment of the present invention;
Fig.6 is a side view of the coolant flow of an immersed cooled battery module according to an embodiment of the present invention;
Fig.7 is a top view of the coolant flow of an immersed cooled battery module according to an embodiment of the present invention;
Fig.8 is a schematic diagram illustrating immersed cooled battery modules with series circulation; and
Fig.9 is a schematic diagram illustrating immersed cooled battery modules with parallel circulation.

### DETAILED DESCRIPTION OF THE INVENTION

Reference will now be made in detail to embodiments illustrated in the accompanying drawings. Wherever possible, the same reference numbers are used in the drawings and the description to refer to the same or like parts. In the drawings, the shape and thickness may be exaggerated for clarity and convenience. This description will be directed in particular to elements forming part of, or cooperating more directly with, methods and apparatus in accordance with the present disclosure. It is to be understood that elements not specifically shown or described may take various forms well known to those skilled in the art. Many alternatives and modifications will be apparent to those skilled in the art, once informed by the present disclosure.

It should be noted that all directional indications (such as up, down, left, right, front, and back) in the embodiments of the present invention are only used to explain the relative positional relationship, the movement conditions, etc. of components in a specific posture (as shown in the figure). If the specific posture changes, the directional indication will also change accordingly. In the whole patent application and the claims, except for clearly described content, the meaning of the articles "a" and "the" includes the meaning of "one or at least one" of the elements or components. Moreover, in the whole patent application and the claims, except that the plurality can be excluded obviously according to the context, the singular articles also contain the description for the plurality of elements or components. Furthermore, in the description of the present invention, "multiple" or "plurality" means two or more.

As described in the conventional technology, the conventional immersed cooled battery module easily causes coolant leakage due to poor sealing. The coolant pipelines are unable to bear excessive pressure and often ruptured due to excessive pressure. In order to solve the foregoing technical problems, the basic idea of the present invention is to provide an immersed cooled battery module, which employs a battery tank composed of an inner tank and an outer tank, thereby significantly reducing the pump thrust required for coolant circulation and improving the problem with bursting coolant pipes and leaking out a coolant.

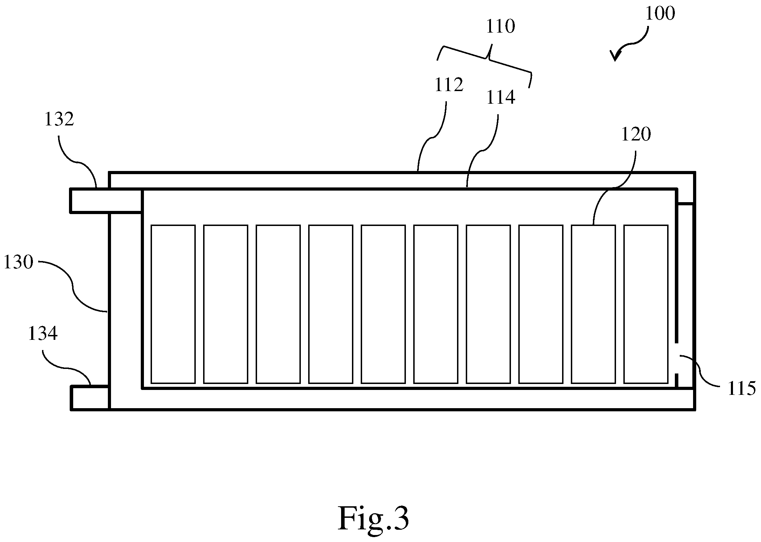

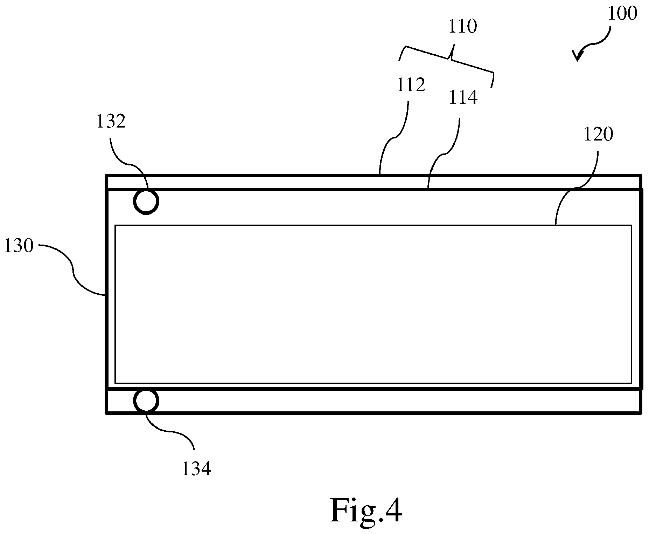

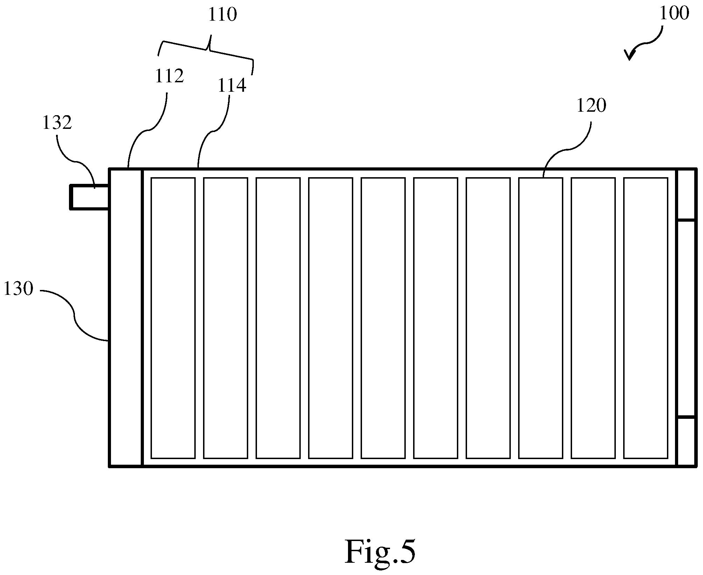

Please refer to Figs.3-5. Fig.3 is a side view of an immersed cooled battery module according to an embodiment of the present invention. Fig.4 is a front view of a modular panel of an immersed cooled battery module according to an embodiment of the present invention. Fig.5 is a top view of an immersed cooled battery module according to an embodiment of the present invention.

In the embodiment, an immersed cooled battery module 100 mainly includes a battery tank 110, a plurality of battery cells 120, and a modular panel 130. The battery tank 110 includes an outer tank 112 and an inner tank 114. The inner tank 114 is accommodated in the outer tank 112. The battery cells 120 are accommodated in the inner tank 114. The bottom of the back side (i.e., right side in the drawing) of the inner tank 114 is provided with an opening 115 that connects to the inner tank 114 and the outer tank 112, such that a coolant can flow between the outer tank 112 and the inner tank 114 through the opening 115. The modular panel 130 is installed on the front side (i.e., left side in the drawing) of the outer tank 112. The top and the bottom of the modular panel 130 are respectively provided with a liquid inlet 132 and a liquid outlet 134. The liquid inlet 132 is connected to the inner tank 114. The liquid outlet 134 is connected to the outer tank 112. The terms "connected to" means the terms "communicating with". In other words, the coolant enters the inner tank 114 from the liquid inlet 132, then overflows to the outer tank 112 through the opening 115 of the inner tank 114, and finally flows out from the outer tank 112 through the liquid outlet 134.

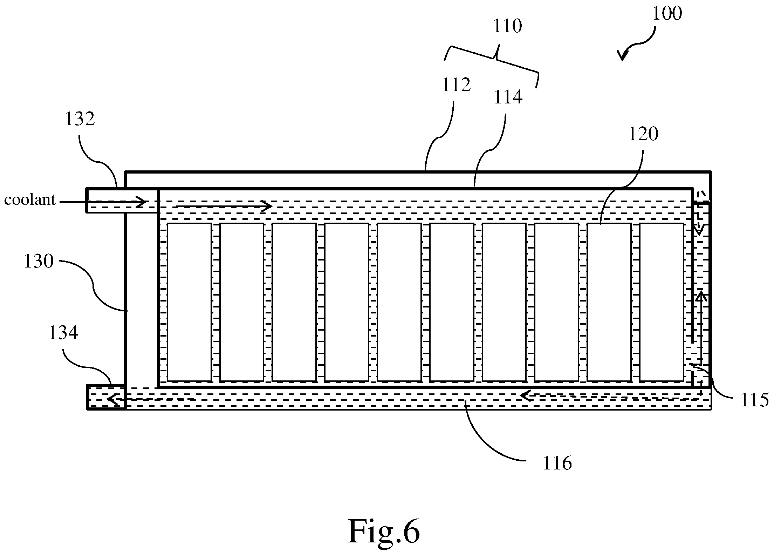

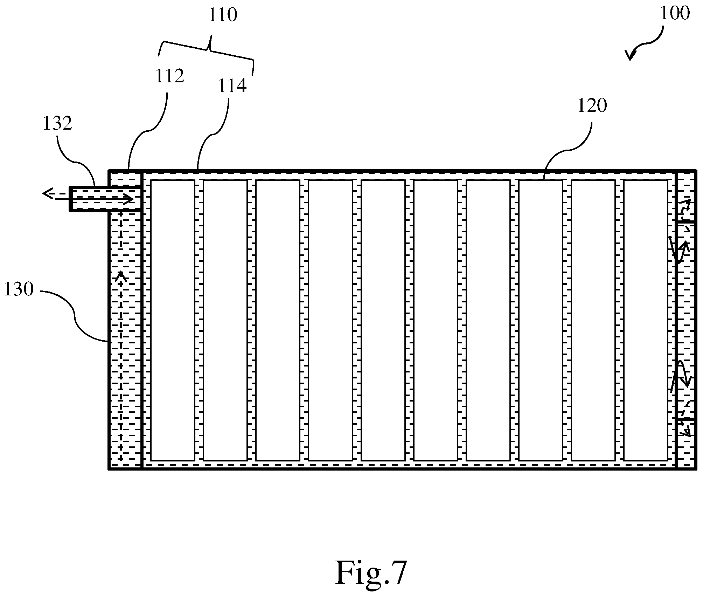

Please refer to Fig.6 and Fig.7. Fig.6 and Fig.7 show the circulation direction of the coolant. Fig.6 is a side view of the coolant flow of an immersed cooled battery module according to an embodiment of the present invention. Fig.7 is a top view of the coolant flow of an immersed cooled battery module according to an embodiment of the present invention. The direction of a solid arrow in the drawing represents the flow direction of the liquid in the inner tank 114. The direction of a dashed arrow in the drawing represents the flow direction of the liquid in the outer tank 112. The gray area in the drawing represents the coolant.

When the coolant circulates, the coolant is sent to the liquid inlet 132 on the top of the modular panel 130. The coolant flows from the liquid inlet 132 into the inner tank 114, and then overflows to the outer tank 112 from the opening 115 on the bottom of the back side of the inner tank 114. The bottom of the inner tank 114 and the outer tank 112 form a liquid channel 116. Through the liquid channel 116, the coolant flows to the liquid outlet 134 on the bottom of the modular panel 130 on the front side of the outer tank 112 and finally discharges from the liquid outlet 134 to complete the circulation of the coolant. The circulation of the coolant can fully dissipate the heat generated by the battery cells 120 to achieve a rapid and uniform heat dissipation effect.

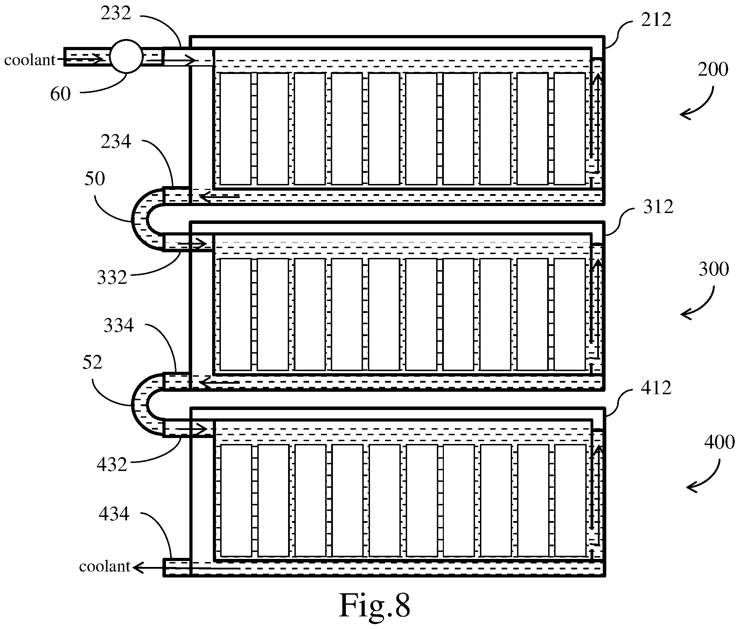

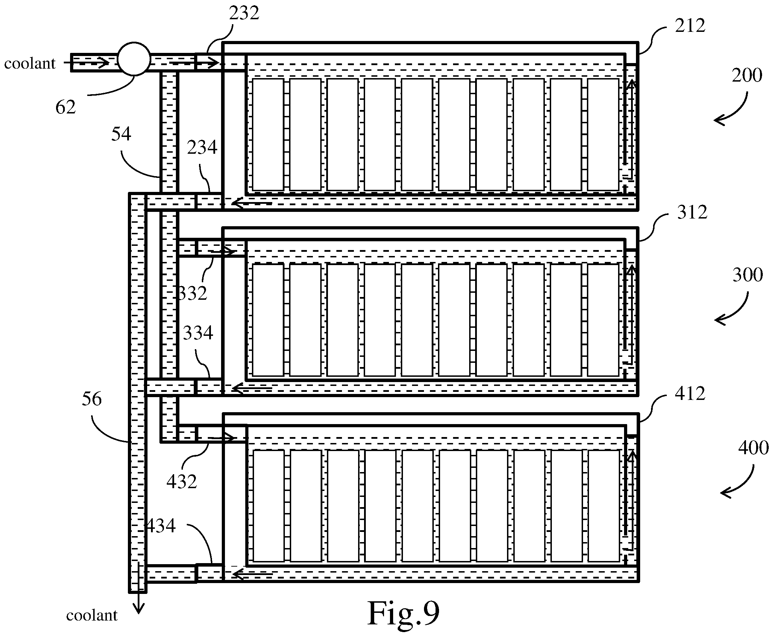

The immersed cooled battery module of the present invention is also suitable for the applications of large-scale energy storage batteries. Please refer to Fig.8 and Fig.9. Fig.8 is a schematic diagram illustrating immersed cooled battery modules with series circulation. Fig.9 is a schematic diagram illustrating immersed cooled battery modules with parallel circulation.

When the multiple immersed cooled battery modules are stacked, the circulation method can be implemented with series circulation shown in Fig.8. For example, three immersed cooled battery modules 200, 300, and 400 are connected in series. Two connection pipes 50 and 52 are arranged on the outer sides of the outer tanks 212, 312 and 412. The connection pipe 50 is connected between the adjacent immersed cooled battery modules 200 and 300. The connection pipe 52 is connected between the adjacent immersed cooled battery modules 300 and 400. The connection pipe 50 connects the liquid outlet 234 of the upper immersed cooled battery module 200 to the liquid inlet 332 of the lower immersed cooled battery module 300. The connection pipe 52 connects the liquid outlet 334 of the upper immersed cooled battery module 300 to the liquid inlet 432 of the lower immersed cooled battery module 400. The configuration of the series circulation is helpful in piping.

In addition, when the multiple immersed cooled battery modules are stacked, the circulation method can be implemented with parallel circulation shown in Fig.9. For example, three immersed cooled battery modules 200, 300, and 400 are connected in parallel. Two connection pipes 54 and 56 are arranged on the outer sides of the outer tanks 212, 312 and 412. The connection pipe 54 is connected to the liquid inlets 232, 332, and 432 of the immersed cooled battery modules 200, 300, and 400. The connection pipe 56 is connected to the liquid outlets 234, 334, and 434 of the immersed cooled battery modules 200, 300, and 400. Although the piping is more complicated in the configuration of the parallel circulation, the parallel circulation can enhance the temperature consistency among the battery modules.

On top of that, the immersed cooled battery modules 200, 300, and 400 can further install one or more pumps 60 and 62 on the outer sides of the outer tanks 212, 312, and 412. The pumps 60 and 62 are connected to the liquid outlets 234, 334, and 434 or the liquid inlets 232, 332, and 432. The circulating flow of the coolant is promoted by applying pressure. For convenience and clarity, the embodiment of the present invention exemplifies the pump 60 connected to the liquid inlet 232 of the immersed cooled battery module 200. In the immersed cooled battery modules 200, 300, and 400 of the present invention, the coolant in each battery module can still be maintained at the liquid level in the battery tank. when the pumps 60 and 62 stop operating and the circulation is interrupted. Therefore, the pumps 60 and 62 do not need to run full time to retain the same amount of coolant in each battery module, thereby reducing operating costs.

Each battery module of the present invention does not need to be completely sealed. The battery module only needs to be properly shielded to prevent dust and foreign matter from entering. The battery module will not cause the problem with coolant leakage. The pump does not require a lot of thrust to achieve large-flow circulation. It is not easy for the coolant pipeline to rupture.

The embodiments described above are only to exemplify the present invention but not to limit the scope of the present invention. Therefore, any equivalent modification or variation according to the shapes, structures, features, or spirit disclosed by the present invention is to be also included within the scope of the present invention.

## Claims

1. An immersed cooled battery module (100) comprising:
a battery tank (110) including an outer tank (112) and an inner tank (114), the inner tank (114) is arranged in the outer tank (112), and the inner tank (114) has an opening (115) connecting to the inner tank (114) and the outer tank (112);
a plurality of battery cells (120) arranged in the inner tank (114); and
a modular panel (130) installed on one side of the outer tank (112), the modular panel (130) has a liquid inlet (132) and a liquid outlet (134), the liquid inlet (132) is connected to the inner tank (114), the liquid outlet (134) is connected to the outer tank (112), and a coolant enters the inner tank (114) from the liquid inlet (132), then overflows to the outer tank (112) through the opening (115), and finally discharges from the liquid outlet (134) to complete circulation of the coolant.

2. The immersed cooled battery module (100) according to claim 1, wherein there are multiple battery tanks (110) connected in series and the liquid outlet (134) of the modular panel (130) on one of the two adjacent battery tanks (110) is connected to the liquid inlet (132) of the modular panel (130) on another of the two adjacent battery tanks (110).

3. The immersed cooled battery module (100) according to claim 2, further comprising a connection pipeline (50) on an outer side of the outer tank (112), and the liquid outlet (134) of the modular panel (130) on one of the two adjacent battery tanks (110) is connected to the liquid inlet (132) of the modular panel (130) on another of the two adjacent battery tanks (110) through the connection pipeline (50).

4. The immersed cooled battery module (100) according to claim 1, wherein there are multiple battery tanks (110) connected in parallel, the liquid inlets (132) of the modular panels (130) on the battery tanks (110) are connected together, and the liquid outlets (134) of the modular panels (130) on the battery tanks (110) are connected together.

5. The immersed cooled battery module (100) according to claim 4, further comprising two connection pipelines (54, 56) on an outer side of the outer tank (112), one of the connection pipelines (54, 56) is connected to the liquid inlets (132) of the modular panels (130) on the battery tanks (110), and another of the connection pipelines (54, 56) is connected to the liquid outlets (134) of the modular panels (130) on the battery tanks (110).

6. The immersed cooled battery module (100) according to claim 1, further comprising a pump (60) on an outer side of the outer tank (112) and the pump (60) is connected to the liquid inlet (132) and the liquid outlet (134) and configured to promote the circulation of the coolant.
